# EUROPEAN PATENT SPECIFICATION

(11) **EP 4 103 472 B1**
(45) Date of publication and mention of the grant of the patent: **18.03.2026**
(21) Application number: 21753400.7
(22) Date of filing: 11.02.2021
(51) Int. Cl.: B64D 47/04, B60Q 3/43, B64D 47/02, B64D 47/06, B64D 45/00, H05B 47/105, H05B 47/155

(54) **AIRCRAFT LIGHTING SYSTEM AND METHOD**
FLUGZEUGBELEUCHTUNGSSYSTEM UND -VERFAHREN
SYSTÈME ET PROCÉDÉ D'ÉCLAIRAGE D'AÉRONEF

(30) Priority: 12.02.2020 US 202062975496 P; 10.02.2021 US 202117172826
(43) Date of publication of application: 21.12.2022
(73) Proprietor: Whelen Aerospace Technologies, Sebastian, FL 32958 (US)
(72) Inventor: BATCHELLER, David, Fargo, North Dakota 58102 (US); GARBERG, Kristofer, Fargo, North Dakota 58102 (US); THUROW, Bradley R., Fargo, North Dakota 58102 (US); WHEELER, Tyler, Fargo, North Dakota 58102 (US); DONDONEAU, Matt, Fargo, North Dakota 58102 (US)
(74) Representative: Uexküll & Stolberg
(86) International application number: PCT/US2021/017576
(87) International publication number: WO 2021/163270

(56) References cited:
- EP-A1- 3 578 462
- US-A1- 2003 193 404
- US-A1- 2008 137 353
- US-A1- 2012 133 283
- US-A1- 2013 088 155
- US-A1- 2015 349 882
- US-A1- 2017 203 855
- US-A1- 2018 312 274
- US-A1- 2019 032 879
- US-A1- 2019 032 879
- US-A1- 2019 047 700
- US-A1- 2019 208 390
- US-B1- 9 856 035
- US-B1- 9 856 035
- US-B2- 8 970 111
- ANONYMOUS: "External Lights", 1 October 2017 (2017-10-01), pages 1 - 2, XP055847018, Retrieved from the Internet <URL:https://web.archive.org/web/20171001125645/http://www.skybrary.aero/index.php/External_Lights> [retrieved on 20210403]
- MARC AUSMAN: "Aircraft Wiring", 20 November 2015 (2015-11-20), pages 1 - 10, XP055847024, Retrieved from the Internet <URL:https://www.kitplanes.com/aircraft-wiring-7> [retrieved on 20210403]

## Description

### RELATED APPLICATIONS

This application is a regular utility non-provisional application and claims priority benefit of US Provisional Patent Application Serial No. 62/975,496, titled "AVIATION LIGHTING SYSTEM AND METHOD", filed February 12, 2020.

### BACKGROUND

Pilots are responsible for every phase of a flight including a pre-flight routine, taxiing, takeoff, climb and departure, cruise, descent and approach, landing, post-flight taxiing, and shutdown. The pre-flight routine requires a pilot to ensure that an aircraft is airworthy and legal before commencing flight. Besides checking fuel levels and verifying aircraft equipment is operational, pilots must also activate or test several lights such as cabin lights, panel lights, a beacon light, navigation lights, anti-collision lights, strobe lights, landing lights, flood lights, spotlights, recognition lights, and logo lights.

Pilot workload is greatest during the most critical phases of flight such as the approach when pilots must fly the aircraft, navigate, communicate with air traffic control (ATC), manage weather data, and handle any aircraft malfunctions and other issues. Many of the aforementioned lights may need to be activated or deactivated during critical phases of flight, further adding to a pilot's workload.

Managing lights even during non-critical phases also adds to pilot fatigue. For example, a pilot may turn on cabin lights manually via a switch upon entering an aircraft. The navigation lights may be turned on at this point to verify that electrical power has been applied to the aircraft. The pilot may then manually switch on a beacon light to indicate that the aircraft is live and the engines are about to turn on. When the aircraft starts running, the pilot may manually switch on navigation lights and taxi lights. If passengers will be boarding the aircraft, the pilot may manually flip a switch to turn on the aircraft's logo lights to illuminate the aircraft and to illuminate a boarding area. Once the aircraft is on the runway, the pilot may flip a switch to turn on the aircraft's anti-collision lights, recognition lights, and landing lights. When the aircraft is airborne, the pilot may manually shut off the aircraft's taxi lights and landing lights, among others. Managing all these lights is time-consuming and distracting.

EP 3 578 462 A1 relates to a passenger assistant system which includes an artificial intelligence processing unit, a sensor interface, a flight crew interface, a passenger interface, and at least one end effector. The sensor interface couples the artificial intelligence processing unit with at least one sensor configured to provide environmental information regarding a cabin of an aircraft. The flight crew interface couples the artificial intelligence processing unit with at least one flight crew input. The passenger interface couples the artificial intelligence processing unit with at least one passenger input. The at least one end effector is coupled to the artificial intelligence processing unit. The artificial intelligence processing unit is configured to direct the at least one end effector to perform at least one task responsive to information acquired from one or more of the sensor interface, flight crew interface, or passenger interface.

US 2019/032879 A1 describes a lighting system for an aircraft, comprising at least one optical acquisition device, at least one long-range headlight each comprising at least one light source, closed-loop control means, and a means for controlling the light sources as a function of the data received from the optical acquisition device and from a data network of the aircraft in such a manner that the lighting system produces at least one beam for adaptive illumination with respect to the flight and taxi phases of the aircraft so as to illuminate at least one predefined region of the space around the aircraft.

US 9,856,035 B1 provides a light system for an aircraft. A light system may include a sensor and a first aircraft light. A controller may be coupled to the sensor and the first aircraft light and may perform operations including receiving data from the sensor, determining a status of the aircraft based on the data, and controlling the first aircraft light based on the status of the aircraft. The first aircraft light may include an external aircraft light and the operations may further include at least one of activating or deactivating the external aircraft light based on the status of the aircraft.

US 2012/133283 A1 relates to an airborne vehicle lighting control apparatus and method for automatically controlling activation and deactivation of an airborne vehicle lighting system. A processor for automatically controlling the lighting system can be employed and having one or more sensors operatively connected to the processor for sensing the current flight operating mode and geographical position of an airborne vehicle. The processor can activate or deactivate lighting based on the current flight operating mode and position.

US 2018/312274 A1 describes a lighting system for an unmanned autonomous vehicle (UAV) which adapts to the environment around the UAV to ensure status notification lights are visible to an operator and/or abide by regulatory lighting requirements. A processor of the UAV may receive information from various sensors regarding environmental conditions and location of the UAV, and adjust a UAV lighting system to ensure visibility under the environmental conditions. Adjustments to the lighting system may include selection of light sources that are illuminated, the illumination intensity of particular light sources, the colors emitted by various light sources and other lighting configurations.

### SUMMARY

The present invention relates to a system for controlling a plurality of aircraft lights on an aircraft as defined by the features of claim 1. Preferred embodiments are defined by the depended claims.

Embodiments of the present invention solve the above-mentioned problems and other related problems and provide a distinct advance in the art of aircraft lighting systems. More particularly, the present invention provides an aircraft lighting system configured to automate an aircraft's lighting based on contextual information such as phase of flight.

An embodiment of the invention is an aircraft lighting system broadly comprising a lighting control module, a number of avionics, and a number of aircraft lights. The aircraft lighting system may also comprise or be in communication with a number of mobile electronic devices, a remote backend server, and a number of 3^{rd} party integrations.

The lighting controller module includes avionics/FADEC (Full Authority Digital Engine Control) interfaces, CAN interfaces, normal light automation interfaces, a Wi-Fi LAN interface, a cell data WAN interface, a satellite link interface, a low power RF Lan interface, and high speed ethernet. The lighting controller module may also be or be part of an aviation connectivity gateway module including a central processing unit (CPU), communication elements, a memory, a battery, an inertial measurement unit (IMU), a global positioning system (GPS) module, and a number of antennas.

The CPU may implement aspects of the present invention with one or more computer programs stored in or on computer-readable medium residing on or accessible by the CPU. Each computer program preferably comprises an ordered listing of executable instructions for implementing logical functions in the processor.

The communication elements connect to the avionics and an electronic control display (ECD) of the aircraft via ARINC 429 and RS-422 connections. The communication elements also connect to the antennas and may include a cellular carrier board and a number of SMA radio or cellular connectors.

The memory may be any computer-readable non-transitory medium that can store programs or applications for use by or in connection with the CPU. The computer-readable medium can be, for example, but not limited to, an electronic, magnetic, optical, electro-magnetic, infrared, or semi-conductor system, apparatus, or device.

The battery may be an internal power supply configured to provide power independently from a power system of the aircraft. The battery may be charged by an alternator or power supply of the aircraft when the aircraft is powered on or when access to the power supply of the aircraft is available.

The IMU derives an orientation of the aviation connectivity gateway module and therefore the aircraft's orientation. In some embodiments, if the GPS module or avionics fail, data generated by the IMU may be used.

The GPS module includes a GPS antenna and is operable to receive satellite signals from a plurality of GPS satellites. The GPS module or the CPU use the satellite signals for derivation of position and speed measurements, such as ground speed, climb speed, descent speed, and altitude of the aircraft.

The antennas allow the aviation connectivity gateway module to transmit aircraft data and other data to and receive situation data from a remote server via the ground-based antennas. The antennas may include an RF antenna (e.g., 433 MHz radio), a cellular antenna, a satellite antenna, a Wi-Fi antenna, a GPS antenna, or any other type of antenna for transmitting, receiving, or broadcasting data over various communication networks.

The avionics may include "glass cockpit" devices, radios, electronic aviation gauges (e.g., HUD), accelerometers, an attitude indicator, a turn coordinator, fuel gauges, oil pressure and oil temperature gauges, engine temperature gauges, engine rpm gauges, navigation aids (e.g., VOR, Radar, NDB), and other sensors. The avionics may also include ADS-B-In/Out devices, flight recording devices, and the like.

The lights may include cabin lights, panel lights, beacon light(s), navigation lights, anti-collision lights, strobe lights, landing lights, flood lights, spot lights, recognition lights, and logo lights. Other lights and electronic and electrical components may also be included and controlled by the aircraft lighting system.

The mobile electronic devices may be tablets, laptops, or mobile phones loaded with aviation applications, a backup HUD, electronic flight bag (EFB) or the like, or key fobs, remote control units, or the like. The mobile electronic devices may also be aviation-specific computing devices. Some of the mobile devices may be remotely connected to the lighting control module via the backend server.

The remote backend server may connect some of the mobile electronic devices and 3^{rd} party integrations to the lighting control module. The remote backend server may be connected to the lighting control module via a cellular network, a Satcom network, or the like.

The 3^{rd} party integrations may be servers hosting aviation weather reporting applications and the like. The 3^{rd} party integrations may connect to the lighting control module via the remote backend server.

Another embodiment is a method of automatic aircraft lighting control for the beginning stages of flight (pre-flight to cruise). First, the aircraft may begin with the lighting system turned off. Activation via a processing unit (e.g., a GPU, APU, or other computing, electronic, or electrical system) may then turn the aircraft's navigation lights and logo lights on.

Activation of an engine ignition switch, or turning key to "ON", may turn the aircraft's beacon light on, as shown in block. Release of a parking brake, or another indicator of intent to move aircraft may activate the aircraft's taxi light. Engine power reaching or exceeding a predetermined value such as, but not specifically, 30% (as determined by avionics or throttle position switches), or pitot heat, or auto-feathering, or other configurable indicators of takeoff phase may activate the aircraft's landing lights, strobe light, and recognition lights.

Activation of landing gear up (or the landing gear successfully being stowed) may turn the aircraft's landing lights and taxi lights off. The aircraft reaching or exceeding 3048m (10,000 feet) Mean Sea Level (MSL) may turn the aircraft's recognition lights and logo lights off.

Another embodiment is a method of automatic aircraft lighting control for the ending stages of flight (cruise to shut-down). First, the aircraft's cabin lights, navigation lights, anti-collision lights, and beacon light may be on during cruise. The aircraft descending to or below 3048m (10,000 feet) MSL or being below a certain airspeed or the engine being below a certain power setting may turn the aircraft's recognition lights and logo lights on.

Activation of landing gear down (or the landing gear successfully being deployed) may turn the aircraft's landing lights and taxi lights and dim the aircraft's cabin lights. The aircraft's weight being transferred to its wheels (i.e., "weight on wheels") for more than predetermined amount of time (e.g., 5 seconds) may turn the aircraft's strobe lights off.

The aircraft's airspeed dropping below a predetermined value such as 55,56 km/h (30 knots) for more than a predetermined amount of time (e.g., 5 seconds) and the engine power being idle may turn the aircraft's landing lights and recognition lights off. The parking brake being set may turn the aircraft's taxi light off. Shutting down the engine may turn off the aircraft's beacon and set the cabin lights to high brightness.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE DRAWING FIGURES

Embodiments of the present invention are described in detail below with reference to the attached drawing figures, wherein:
FIG. 1 is a schematic diagram of an aircraft lighting system constructed in accordance with an embodiment of the invention;
FIG. 2 is another schematic diagram of the aircraft lighting system of FIG. 1;

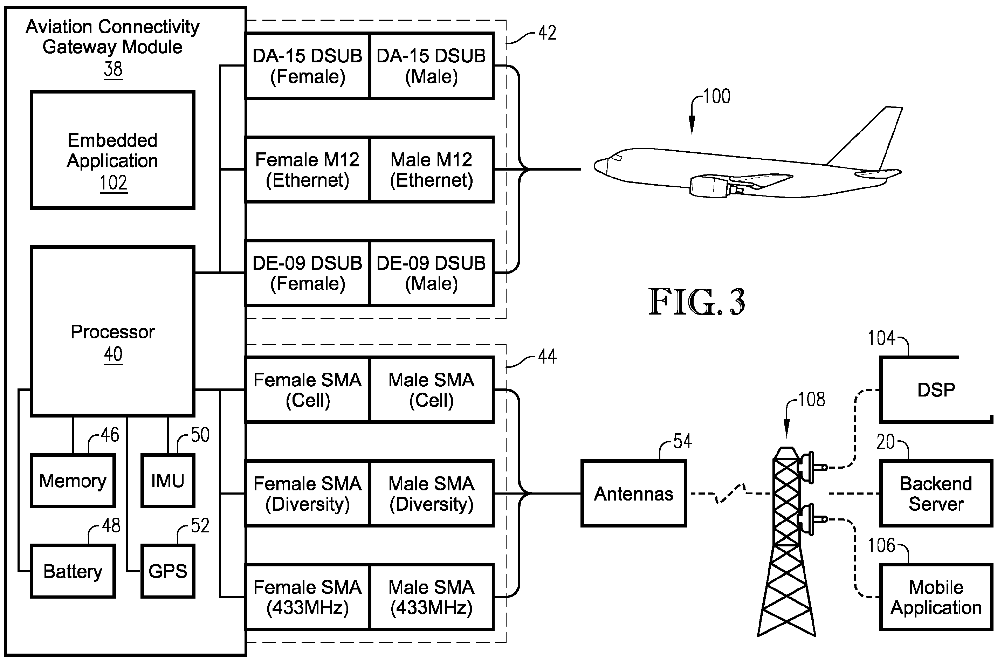

FIG. 3 is a schematic diagram of a lighting controller module constructed in accordance with an embodiment of the invention;
FIG. 4 is a flow diagram depicting certain steps of a method of automatic aircraft lighting control; and
FIG. 5 is a flow diagram depicting certain steps of another method of automatic aircraft lighting control.

### DETAILED DESCRIPTION OF THE EMBODIMENTS

The following detailed description of the invention references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the present invention. The following detailed description is, therefore, not to be taken in a limiting sense. The scope of the present invention is defined only by the appended claims.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the current technology can include a variety of combinations and/or integrations of the embodiments described herein.

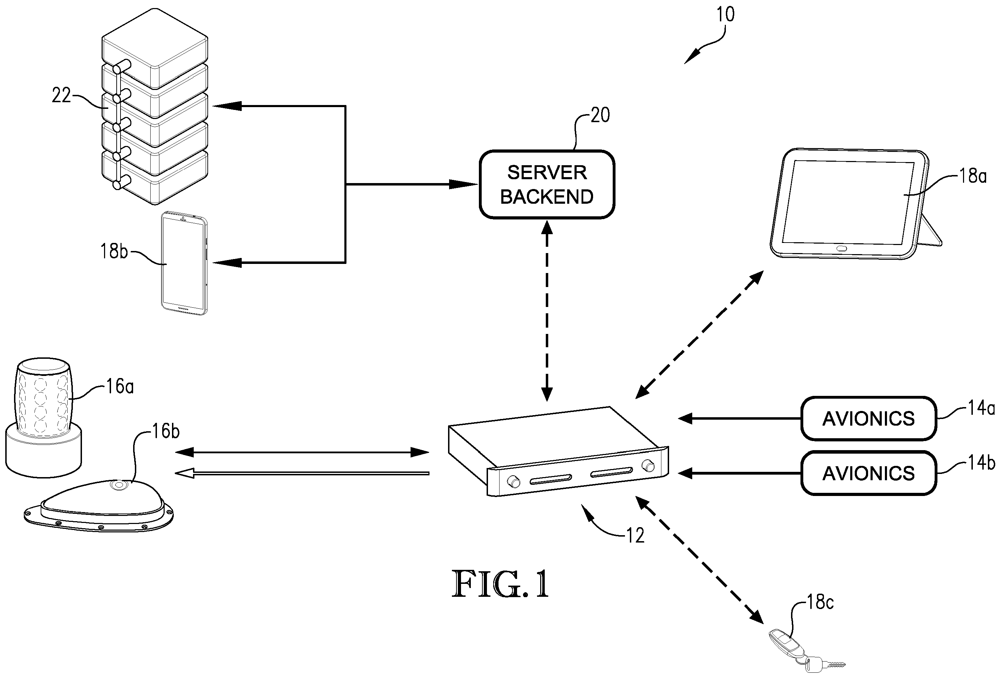

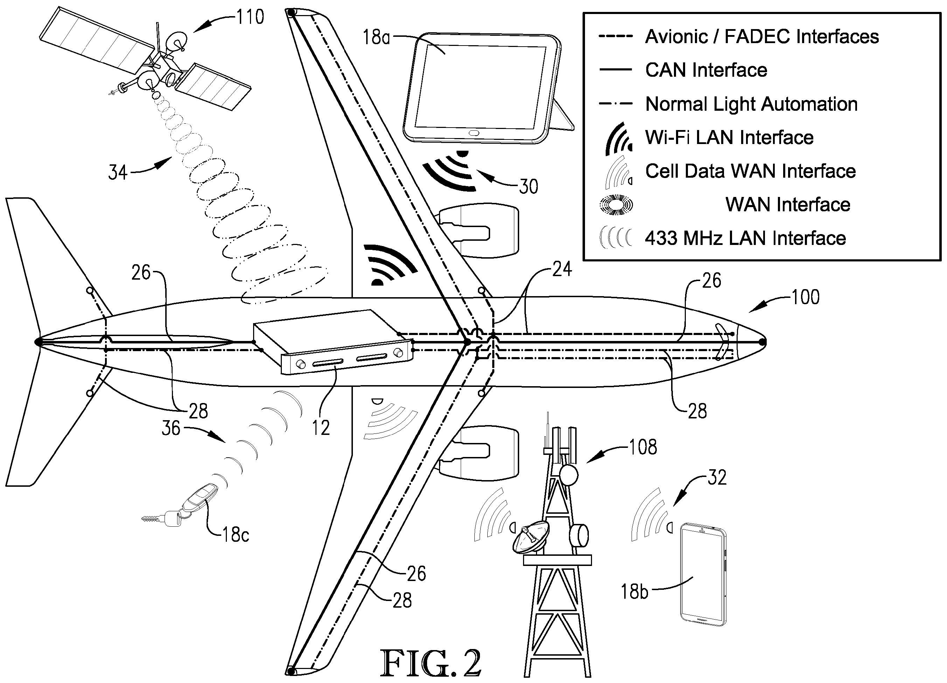

Turning to FIGS. 1 and 2, an aircraft lighting system 10 constructed in accordance with an embodiment of the invention will now be described in detail. The aircraft lighting system 10 broadly comprises a lighting control module 12, a plurality of avionics 14a,b, and a plurality of aircraft lights (e.g., lights 16a,b in FIG. 1). The aircraft lighting system 10 may also comprise or be in communication with a plurality of mobile electronic devices 18a-c, a remote backend server 20, and a plurality of 3^{rd} party integrations 22.

The lighting controller module 12 includes CAN Interfaces 26 (eg. ARINC 825 interfaces) for controlling direction controlled lights, and may include avionics/FADEC interfaces 24 (e.g., ARINC 429 or RS-422 interfaces) for communicating with the avionics 14, normal light automation 28 such as digital or analog I/O for switching on existing aircraft lights, a Wi-Fi LAN interface 30, a cell data WAN interface 32 configured to provide cellular capabilities such as 4G or 5G LTE worldwide cellular with 3G and 2G backup, a satellite link such as a Satcom RUDICS WAN interface 34, a low power RF Lan interface 36 such as 433 MHz, and high speed ethernet. The lighting controller module 12 may also include an internal inertial measurement unit, GPS components, high speed ethernet, and/or Satcom. The lighting controller module 12 may also be or be part of an aviation connectivity gateway module 38 including additional data and connectivity features as described below.

The aviation connectivity gateway module 38 broadly comprises a central processing unit (CPU) 40, a first set of communication elements 42, a second set of communication elements 44, a memory 46, a battery 48, an inertial measurement unit (IMU) 50, a global positioning system (GPS) module 52, and a plurality of antennas 54. The aviation connectivity gateway module 38 may be housed in a machined or molded enclosure and may be mounted or located in an aircraft 100. The enclosure may weigh less than 0,907 kg (two pounds).

The CPU 40 may implement aspects of the present invention with one or more computer programs (e.g., embedded application 102) stored in or on computer-readable medium residing on or accessible by the CPU 40. Each computer program preferably comprises an ordered listing of executable instructions for implementing logical functions in the processor. Each computer program can be embodied in any non-transitory computer-readable medium, such as the memory 46, for use by or in connection with an instruction execution system, apparatus, or device, such as a computer-based system, processor-containing system, or other system that can fetch the instructions from the instruction execution system, apparatus, or device, and execute the instructions.

The first set of communication elements 42 connect to the avionics 14 and an electronic control display (ECD) of the aircraft 100 via ARINC 429 and RS-422 connections. The first set of communication elements may include connectors such as a DE-09 D-Subminiature connector, a DA-15 D-Subminiature connector, and an M12 4 POS connector for an ethernet connection. The DE-09 D-Subminiature connector may accommodate hot bus power, ARINC 429, RS-422 Tx/Rx Ch A, Switched Power ADC, and 2X Low Side Digital Out. The DA-15 D-Subminiature connector may accommodate RS-422 Tx/Rx Ch B and 2X Low Side Digital out. The M12 4 POS accommodates an ethernet connection. The first set of communication elements 42 may also be able to connect to external devices via Wi-Fi. The first set of communication elements 42 may be connected to electrically isolated portions of the aviation connectivity gateway module 38 or two electrically isolated printed circuit boards to prevent channel crossover and prevent transmission of bad data from one side of the aviation connectivity gateway module 10 to the other.

The second set of communication elements 44 connect the aviation connectivity gateway module 38 to the antennas 54 and may include a cellular carrier board and a number of SMA radio or cellular connectors to accommodate Cellular Main, Cellular Diversity, and 433MHz Radio communications. The second set of communication elements 44 allow the aviation connectivity gateway module 38 to communicate with, receive data from, and offload data to a DSP 104, the remote server 20, or a remote mobile application 106 via a network including ground-based antennas 108.

The memory 46 may be any computer-readable non-transitory medium that can store programs or applications for use by or in connection with the CPU. The computer-readable medium can be, for example, but not limited to, an electronic, magnetic, optical, electro-magnetic, infrared, or semi-conductor system, apparatus, or device. More specific, although not inclusive, examples of the computer-readable medium would include the following: an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM).

The battery 48 may be an internal power supply configured to provide power independently from a power system of the aircraft 100. The battery 48 may be charged by an alternator or power supply of the aircraft 100 when the aircraft 100 is powered on or when access to the power supply of the aircraft 100 is available.

The IMU 50 derives an orientation of the aviation connectivity gateway module 38 and therefore the aircraft's orientation. In some embodiments, if the GPS module 52 or avionics fail, information generated by the IMU 50 may be used.

The GPS module 52 includes a GPS antenna and is operable to receive satellite signals from a plurality of GPS satellites 110. The GPS module 52 or the CPU 40 use the satellite signals for derivation of position and speed measurements, such as ground speed, climb speed, descent speed, and altitude of the aircraft. In one embodiment, this information is derived via a GPS module of the aircraft 100 or from the IMU 50 or avionics 14 of the aircraft 100 when GPS/satellite signals are not available.

The antennas 54 allow the aviation connectivity gateway module 38 to transmit aircraft data and other data to and receive situation data from remote server 108 via the ground-based antennas 54. The antennas 54 may include an RF antenna (e.g., 433 MHz radio), a cellular antenna, a satellite antenna, a Wi-Fi antenna, a GPS antenna, or any other type of antenna for transmitting, receiving, or broadcasting data over various communication networks.

In some embodiments, the aviation connectivity gateway module 38 may also include or be connected to a recoverable data module (RDM). For example, the aviation connectivity gateway module 38 may be attached to an RDM-300, which is an existing flight data recorder. The RDM may save information in real time on hardened memory.

The avionics 14 may include "glass cockpit" devices, radios, electronic aviation gauges (e.g., HUD), accelerometers, an attitude indicator, a turn coordinator, fuel gauges, oil pressure and oil temperature gauges, engine temperature gauges, engine rpm gauges, navigation aids (e.g., VOR, Radar, NDB), and other sensors. The avionics 14 may also include ADS-B-In/Out devices, flight recording devices, and the like.

The lights 16a,b may include cabin lights, panel lights, beacon light(s), navigation lights, anti-collision lights, strobe lights, landing lights, flood lights, spot lights, recognition lights, and logo lights. Other lights and electronic and electrical components may also be included and controlled.

The mobile electronic devices 18a-c may be tablets, laptops, or mobile phones loaded with aviation applications, a backup HUD, electronic flight bag (EFB) or the like, or key fobs, remote control units, or the like. The mobile electronic devices 18a-c may also be aviation-specific computing devices. Some of the mobile devices 18a-c may be remotely connected to the lighting control module 12 via the backend server 20.

The remote backend server 20 may connect some of the mobile electronic devices 12 and 3^{rd} party integrations 20 to the lighting control module 12. The remote backend server 20 may be connected to the lighting control module 12 via a cellular network, a Satcom network, or the like.

The 3^{rd} party integrations 22 may be servers hosting aviation weather reporting applications and the like for providing data or control instructions to the aircraft lighting system 10. The 3^{rd} party integrations 22 may connect to the lighting control module 12 via the remote backend server 20.

Use of the aircraft lighting system 10 will now be described. First, the avionics 14 or other sensors may detect states of the aircraft 100. For example, the avionics 14 may detect at least one of airspeed, a ground speed, an engine on or an engine off condition, an engine rpm, an external lighting condition, a time of day, an outside air temperature, icing, an altitude, landing gear up, landing gear down, weight on wheels, an approach or departure procedure or leg being active, or a navigation signal indicating "established" (.e.g., on a localizer or on a glideslope).

The aircraft lighting system 10 may then determine that a condition is met according to one of the states detected by the avionics 14 or other sensors. The aircraft lighting system 10 may then automatically turn on one of the plurality of aircraft lights 16a,b when the condition is met. The aircraft lighting system 10 may also automatically turn off one of the plurality of aircraft lights 16a,b when another condition is met or when the condition is no longer met.

In some embodiments, the aircraft lighting system 10 may automate the aircraft's lighting by driving relays according to a current phase of flight. The aircraft lighting system 10 may incorporate a flight management system that controls lighting upon the initiation or activation of an approach sequence, passing an approach waypoint, entering a glide path, entering an airspace, and the like. The flight management system may automate the aircraft's lighting according to location information. For example, the flight management system may indicate a position of the aircraft 100 relative to an airport gate, a taxiway, a runway, or the like via GNSS signals or via signals from a navigation aid (VOR, ILS, or the like). The aircraft lighting system 10 may also automate the aircraft's lighting according to contextual environmental information. For example, the aircraft 100 may include cameras that provide image-based indications of the aircraft's position relative to an airport gate, a taxiway, a runway, an airport, and the like.

The aircraft lighting system 10 may be automated to change from flood light to spot lights when the aircraft lands. To that end, the taxi and landing lights may be configured to change between being used as spot lights to being used as flood lights and veritable headlamps. This may be achieved via CAN-enabled lights or other methodology to digitally control said lights.

The aircraft lighting system 10 is configured to become smarter via artificial intelligence. That is, the aircraft lighting system 10 is configured to adapt or change according to previous usage for improved or optimized operation.

The aircraft lighting system 10 (or - not claimed - the aircraft lights 16a,b themselves) automatically digitally controls aim, and may control intensity, or activation state of the aircraft lights 16a,b according to a direction the aircraft is being steered and optionally according to other situational factors such as nearby taxi traffic. Furthermore, the aircraft lighting system 10 (or the aircraft lights 16a,b themselves) may automatically change a configuration, a brightness, or intensity of the aircraft lights 16a,b when another condition is met.

The aircraft lighting system 10 may be activated and deactivated via a master switch, an avionics switch, another switch independent of the master switch and avionics switch, or a remote mobile device or computing system. For example, the aircraft lighting system 10 may automate the aircraft's lighting such that when the aircraft's master switch is switched on the beacon light on the exterior of the plane is automatically turned on. Similarly, the navigation lights, recognition lights, taxi lights, and logo lights may turn on automatically upon the aircraft lighting system 10 detecting motion of the aircraft. In one embodiment, the aircraft lighting system 10 may allow the aircraft 100 to revert to manual lighting if the aircraft lighting system 10 malfunctions.

The above-described aircraft lighting system 10 provides several advantages. For example, the aircraft lighting system 10 reduces pilot workload and allows the pilot to focus on more critical tasks, thus improving flight safety. Lighting automation also ensures lights are turned on and turned off at appropriate times. Furthermore, lighting automation expands lighting control and lighting options.

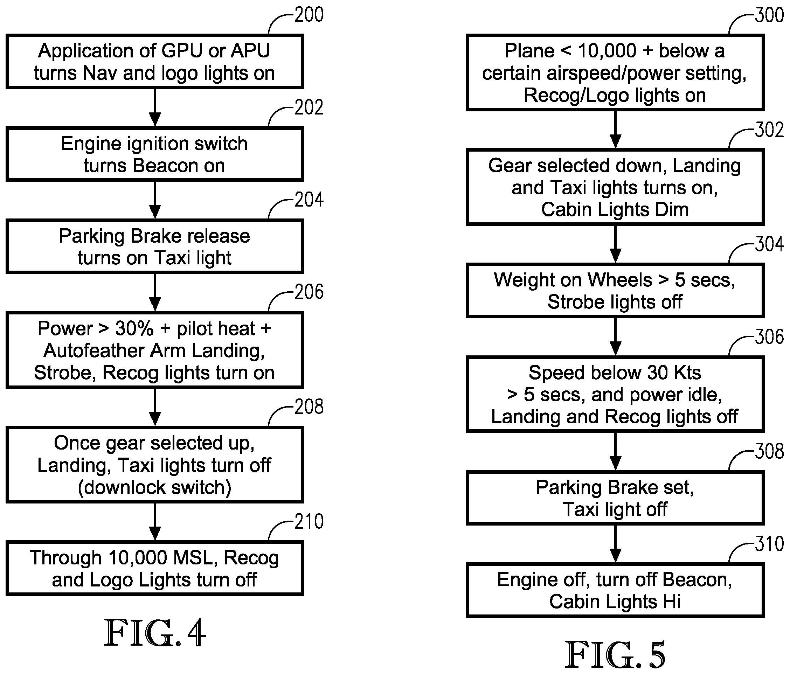

Turning to FIG. 4, a method of automatic aircraft lighting control for the beginning stages of flight (pre-flight to cruise) will now be described. First, the aircraft may begin with the lighting system turned off. Activation via a processing unit (e.g., a GPU, APU, or other computing, electronic, or electrical system) may then turn the aircraft's navigation lights and logo lights on, as shown in block 200.

Activation of an engine ignition switch, or turning key to "ON", may turn the aircraft's beacon light on, as shown in block 202. Release of a parking brake, or another indicator of intent to move aircraft may activate the aircraft's taxi light, as shown in block 204. Engine power reaching or exceeding a predetermined value such as, but not specifically, 30% (as determined by avionics or throttle position switches), or pitot heat, or auto-feathering, or other configurable indicators of takeoff phase may activate the aircraft's landing lights, strobe light, and recognition lights, as shown in block 206.

Activation of landing gear up (or the landing gear successfully being stowed) may turn the aircraft's landing lights and taxi lights off, as shown in block 208. The aircraft reaching or exceeding a height such as 3048m (10,000 feet) Mean Sea Level (MSL) may turn the aircraft's recognition lights and logo lights off, as shown in block 210.

Turning to FIG. 5, a method of automatic aircraft lighting control for the ending stages of flight (cruise to shut-down) will now be described. First, the aircraft's cabin lights, navigation lights, anti-collision lights, and beacon light may be on during cruise. The aircraft descending to or below a height such as 3048m (10,000 feet) MSL or being below a certain airspeed or the engine being below a certain power setting may turn the aircraft's recognition lights and logo lights on, as shown in block 300.

Activation of landing gear down (or the landing gear successfully being deployed) may turn the aircraft's landing lights and taxi lights and dim the aircraft's cabin lights, as shown in block 302. The aircraft's weight being transferred to its wheels (i.e., "weight on wheels") for more than predetermined amount of time (e.g., 5 seconds) may turn the aircraft's strobe lights off, as shown in block 304.

The aircraft's airspeed dropping below a predetermined value such as 55,56 km/h (30 knots) for more than a predetermined amount of time (e.g., 5 seconds) and the engine power being idle may turn the aircraft's landing lights and recognition lights off, as shown in block 306. The parking brake being set may turn the aircraft's taxi light off, as shown in block 308. Shutting down the engine may turn off the aircraft's beacon and set the cabin lights to high brightness, as shown in block 310.

### ADDITIONAL CONSIDERATIONS

Although the present application sets forth a detailed description of numerous different embodiments, the legal scope of the description is defined by the words of the claims set forth at the end of this patent. The detailed description is to be construed as exemplary only and does not describe every possible embodiment since describing every possible embodiment would be impractical. Numerous alternative embodiments may be implemented, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as the processing system and control systems, may be implemented as special purpose or as general purpose devices. For example, the processing system may comprise dedicated circuitry or logic that is permanently configured, such as an application-specific integrated circuit (ASIC), or indefinitely configured, such as an FPGA, to perform certain operations. The processing system may also comprise programmable logic or circuitry (e.g., as encompassed within a general-purpose processor or other programmable processor) that is temporarily configured by software to perform certain operations. It will be appreciated that the decision to implement the processing system as special purpose, in dedicated and permanently configured circuitry, or as general purpose (e.g., configured by software) may be driven by cost and time considerations.

Accordingly, the terms "processing system" or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processing system is temporarily configured (e.g., programmed), each of the processing elements need not be configured or instantiated at any one instance in time. For example, where the processing system comprises a general-purpose processor configured using software, the general-purpose processor may be configured as respective different processing elements at different times. Software may accordingly configure the processing system to constitute a hardware configuration at one instance of time and to constitute a different hardware configuration at a different instance of time.

Computer hardware components, such as communication elements, memory elements, processing elements, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, later, access the memory device to retrieve and process the stored output. Computer hardware components may also initiate communications with input or output devices, and may operate on a resource (e.g., a collection of information).

The various operations of example methods described herein may be performed, at least partially, by one or more processing elements that are temporarily configured (e.g., by software) or permanently configured to perform the relevant operations. Whether temporarily or permanently configured, such processing elements may constitute processing element-implemented modules that operate to perform one or more operations or functions. The modules referred to herein may, in some example embodiments, comprise processing element-implemented modules.

Similarly, the methods or routines described herein may be at least partially processing element-implemented. For example, at least some of the operations of a method may be performed by one or more processing elements or processing element-implemented hardware modules. The performance of certain of the operations may be distributed among the one or more processing elements, not only residing within a single machine, but deployed across a number of machines. In some example embodiments, the processing elements may be located in a single location (e.g., within a home environment, an office environment or as a server farm), while in other embodiments the processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processing element and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

Although the invention has been described with reference to the embodiments illustrated in the attached drawing figures, it is noted that the scope of the invention is defined by the appended claims.

## Claims

1. A system (10) for controlling a plurality of aircraft lights (16a, 16b) on an aircraft (100), the system comprising:
a plurality of sensors (14a, 14b) configured to detect states of the aircraft (100); and
a processor (40) communicatively coupled with the aircraft lights (16a, 16b) through controller area network interfaces, the processor (40) being configured to:
determine that a condition is met according to one of the states detected by one of the plurality of sensors (14, 14b),
automatically turn on one of the plurality of aircraft lights (16a, 16b) when the condition is met, and
automatically digitally control aim of one of the plurality of aircraft lights according to a direction the aircraft is being steered,
the states including at least one of an airspeed, a ground speed, an engine on or an engine off condition, an engine rpm, an external lighting condition, a time of day, an outside air temperature, icing, an altitude, landing gear up, landing gear down, weight on wheels, and an approach or departure procedure being active,
wherein the system is configured to optimize, via artificial intelligence, automated aircraft lighting operation based on previous manual aircraft lighting usage relative to the states.

2. The system (10) of claim 1, wherein the processor (40) is further configured to automatically turn off one of the plurality of aircraft lights when the condition is no longer met or when another condition is met.

3. The system (10) of claim 1, wherein when installed in said aircraft the processor (40) is part of an aviation connectivity gateway module (38).

4. The system (10) of claim 1, wherein the processor (40) is further configured to change a configuration of one of the aircraft lights when another condition is met.

5. The system (10) of claim 1, wherein the processor (40) is further configured to change a brightness or intensity of one of the aircraft lights when another condition is met.

6. The system (10) of claim 1, wherein the aircraft lights include navigation lights, a beacon light, a strobe light, a landing light, a taxi light, a recognition light, a logo light, cabin lights, and panel lights.

7. The system (10) of claim 1, wherein the system is configured to be activated via a master switch of the aircraft (100).

8. The system (10) of claim 1, wherein the system is configured to be activated via an avionics switch of the aircraft (100).

9. The system (10) of claim 1, wherein the system further comprises a system activation switch independent of a master switch and an avionics switch of the aircraft (100).

10. The system (10) of claim 1, wherein the system is configured to be activated via a remote mobile device (18a-c).

11. The system (10) of claim 1, wherein the processor (40) is configured to receive data from third party integrations and control the aircraft lights according to the received data.

12. The system (10) of claim 1, wherein the system (40) is configured to allow the aircraft to revert to manual lighting if the system malfunctions.

## Patentansprüche

1. System (10) zur Steuerung einer Mehrzahl von Flugzeugleuchten (16a, 16b) an einem Flugzeug (100), wobei das System umfasst:
eine Mehrzahl von Sensoren (14a, 14b), die ausgestaltet sind, um Zustände des Flugzeugs (100) zu erfassen; und
einen Prozessor (40), der über Controller-Area-Network-Schnittstellen mit den Flugzeugleuchten (16a, 16b) kommunikativ gekoppelt ist, wobei der Prozessor (40) ausgestaltet ist, zum:
Bestimmen, dass eine Bedingung gemäß einem von einem der Mehrzahl von Sensoren (14, 14b) erfassten Zustände erfüllt ist,
automatisches Einschalten von einer der Mehrzahl von Flugzeugleuchten (16a, 16b), wenn die Bedingung erfüllt ist, und
automatisches digitales Steuern des Ziels von einer der Mehrzahl von Flugzeugleuchten entsprechend einer Richtung, in die das Flugzeug gesteuert wird,
wobei die Zustände mindestens einen umfassen von Luftgeschwindigkeit, Bodengeschwindigkeit, Motor-Ein- oder Motor-AusZustand, Motordrehzahl, äußeren Lichtbedingung, Tageszeit, Außenlufttemperatur, Vereisung, Höhe, Fahrwerk eingefahren, Fahrwerk ausgefahren, Gewicht auf Räder, und aktives Anflug- oder Abflugverfahren,
wobei das System ausgestaltet ist, um mittels künstlicher Intelligenz den automatisierten Betrieb der Flugzeugbeleuchtung auf Basis der vorherigen manuellen Nutzung der Flugzeugbeleuchtung hinsichtlich die Zustände zu optimieren.

2. System (10) nach Anspruch 1, wobei der Prozessor (40) ferner ausgestaltet ist, um automatisch eine der Mehrzahl von Flugzeugleuchten auszuschalten, wenn die Bedingung nicht mehr erfüllt ist oder wenn eine andere Bedingung erfüllt ist.

3. System (10) nach Anspruch 1, wobei der Prozessor (40), wenn er in dem Flugzeug installiert ist, Teil eines Aircraft-Connectivity-Gateway-Moduls (38) ist.

4. System (10) nach Anspruch 1, wobei der Prozessor (40) ferner ausgestaltet ist, um eine Konfiguration von einer der Flugzeugleuchten zu ändern, wenn eine andere Bedingung erfüllt ist.

5. System (10) nach Anspruch 1, wobei der Prozessor (40) ferner ausgestaltet ist, um eine Helligkeit oder Intensität von einer der Flugzeugleuchten zu verändern, wenn eine andere Bedingung erfüllt ist.

6. System (10) nach Anspruch 1, wobei die Flugzeugleuchten Navigationsleuchten, eine Warnleuchte, eine Stroboskopleuchte, eine Landeleuchte, eine Rollleuchte, eine Erkennungsleuchte, eine Logo-Leuchte, Kabinenleuchten und Panel-Leuchten umfassen.

7. System (10) nach Anspruch 1, wobei das System ausgestaltet ist, um über einen Hauptschalter des Flugzeugs (100) aktiviert zu werden.

8. System (10) nach Anspruch 1, wobei das System ausgestaltet ist, um über einen Avionik-Schalter des Flugzeugs (100) aktiviert zu werden.

9. System (10) nach Anspruch 1, wobei das System ferner einen System-Aktivierungsschalter umfasst, der unabhängig von einem Hauptschalter und einem Avionik-Schalter des Flugzeugs (100) ist.

10. System (10) nach Anspruch 1, wobei das System ausgestaltet ist, um über eine mobile Fernbedienungsvorrichtung (18a-c) aktiviert zu werden.

11. System (10) nach Anspruch 1, wobei der Prozessor (40) ausgestaltet ist, um Daten von Drittanbieter-Integrationen zu empfangen und die Flugzeugleuchten entsprechend den empfangenen Daten zu steuern.

12. System (10) nach Anspruch 1, wobei das System (40) ausgestaltet ist, um es dem Flugzeug zu ermöglichen, bei Fehlfunktionen des Systems auf manuelle Beleuchtung umzuschalten.

## Revendications

1. Système (10) pour commander une pluralité de lampes d'aéronef (16a, 16b) sur un aéronef (100), le système comprenant:
une pluralité de capteurs (14a, 14b) configurée pour détecter des états de l'aéronef (100); et
un processeur (40) couplé de façon communiquante avec les lampes d'aéronef (16a, 16b) par l'intermédiaire d'interfaces de réseau CAN, le processeur (40) étant configuré pour:
déterminer qu'une condition est remplie en fonction de l'un des états détectés par un capteur de la pluralité de capteurs (14a, 14b),
allumer automatiquement une lampe de la pluralité de lampes d'aéronef (16a, 16b) lorsque la condition est remplie, et
commander automatiquement de façon numérique l'orientation d'une lampe de la pluralité de lampes d'aéronef en fonction d'une direction vers laquelle on oriente l'aéronef,
les états comprenant au moins un paramètre parmi la vitesse, la vitesse sol, une condition de moteur en marche ou de moteur arrêté, un régime de moteur, une condition d'éclairage extérieur, une heure du jour, une température de l'air extérieur, un givrage, une altitude, le train d'atterrissage rentré, le train d'atterrissage sorti, le poids sur les roues, et une procédure d'approche ou de départ active,
dans lequel le système est configuré pour optimiser, par intelligence artificielle, le fonctionnement automatisé des lampes d'aéronef en se basant sur l'emploi passé manuel des lampes d'aéronef relativement aux états.

2. Système (10) selon la revendication 1, dans lequel le processeur (40) est configuré en outre pour éteindre automatiquement une lampe de la pluralité de lampes d'aéronef quand la condition n'est plus remplie ou quand une autre condition est remplie.

3. Système (10) selon la revendication 1, dans lequel, lorsqu'il est installé dans ledit aéronef, le processeur (40) fait partie d'un module de passerelle de connectivité d'aviation (38).

4. Système (10) selon la revendication 1, dans lequel le processeur (40) est configuré en outre pour modifier une configuration de l'une des lampes d'aéronef quand une autre condition est remplie.

5. Système (10) selon la revendication 1, dans lequel le processeur (40) est configuré en outre pour modifier la luminosité ou l'intensité de l'une des lampes d'aéronef quand une autre condition est remplie.

6. Système (10) selon la revendication 1, dans lequel les lampes d'aéronef comprennent des feux de navigation, une balise, un feu à éclats, un phare d'atterrissage, un phare de roulage, un feu de reconnaissance, un projecteur d'empennage, des lampes de cabine et des voyants.

7. Système (10) selon la revendication 1, dans lequel le système est configuré pour être activé au moyen d'un interrupteur général de l'aéronef (100).

8. Système (10) selon la revendication 1, dans lequel le système est configuré pour être activé au moyen d'un interrupteur d'équipements de l'aéronef (100).

9. Système (10) selon la revendication 1, dans lequel le système comprend en outre un interrupteur d'activation de système, indépendant d'un interrupteur général et d'un interrupteur d'équipements de l'aéronef (100).

10. Système (10) selon la revendication 1, dans lequel le système est configuré pour être activé au moyen d'un appareil mobile distant (18a-c).

11. Système (10) selon la revendication 1, dans lequel le processeur (40) est configuré pour recevoir des données provenant d'intégrations tierces et pour commander les lampes d'aéronef en fonction des données reçues.

12. Système (10) selon la revendication 1, dans lequel le système (40) est configuré pour permettre à l'aéronef de revenir à l'éclairage manuel en cas de dysfonctionnement du système.
